# EUROPEAN PATENT APPLICATION

(11) **EP 4 394 179 A1**
(43) Date of publication of application: **03.07.2024**
(21) Application number: 22383320.3
(22) Date of filing: 30.12.2022
(51) Int. Cl.: F03D 7/02

(54) **METHOD FOR OPERATING A WIND TURBINE, CONTROL SYSTEM FOR OPERATING A WIND TURBINE AND WIND TURBINE**

(71) Applicant: Nordex Energy Spain, S.A.U., 31395 Barasoain (Navarra) (ES); Nordex Energy SE & Co. KG, 22419 Hamburg (DE)
(72) Inventor: TORRES ELIZONDO, Antonio, 31006 Pamplona (ES); MIRANDA SUESCUN, Edurne, 31192 Mutilva (ES); VAN SOLINGEN, Edwin, 22850 Norderstedt (DE); POKRIEFKE, Gritt, 22419 Hamburg (DE); LABORENZ, Jacob, 22419 Hamburg (DE); JOIS, Varun, 22419 Hamburg (DE)
(74) Representative: Epping - Hermann - Fischer

(57) **Abstract**

According to an embodiment, the method is for operating a wind turbine (100) having a rotor (10) with at least one rotor blade (1, 2, 3) and a rotor speed setting system (13, 14) for setting the speed of rotation of the rotor. The method comprises a step of providing first information (11) which is representative for whether an edge-wise movement of at least one rotor blade exceeds a threshold while the rotor is rotating. If this is the case, an output signal is generated, wherein the output signal is configured to cause the rotor speed setting system to change the speed of rotation of the rotor without stopping rotation of the rotor in order to reduce the edge-wise movement of the at least one rotor blade.

## Description

The present disclosure relates to a method for operating a wind turbine. Furthermore, the present disclosure relates to a computer program, a computer-readable data carrier and a control device for performing the method for operating a wind turbine. Moreover, the present disclosure relates to a control system for operating a wind turbine and a wind turbine.

Wind turbines are widely known and are used to convert wind energy into electrical energy. The lengths of the rotor blades used in such wind turbines have increased in recent years. Vibrations of the rotor blades induce load on the rotor shaft and bear the risk of structural damage of the rotor blades.

One object to be achieved is to provide a method for operating a wind turbine with which vibrations of the rotor blades of the wind turbine can be reduced, particularly without unnecessarily reducing the power output of the wind turbine. Further objects to be achieved are to provide a computer program, a computer-readable data carrier and a control device for performing such a method. Additional objects to be achieved are to provide a control system for operating a wind turbine with such a method and a wind turbine which is operable with such a method.

First, the method for operating a wind turbine is specified.

According to an embodiment, the method is for operating a wind turbine having a rotor with at least one rotor blade and a rotor speed setting system for setting the speed of rotation of the rotor. The method comprises a step of providing first information which is representative for whether an edge-wise movement of at least one rotor blade exceeds a threshold while the rotor is rotating. If this is the case, i.e. if the first information is representative for the edge-wise movement of at least one rotor blade to exceed the threshold, an output signal is generated, wherein the output signal is configured to cause the rotor speed setting system to change the speed of rotation of the rotor without stopping rotation of the rotor in order to reduce the edge-wise movement of the at least one rotor blade.

The present invention is, inter alia, based on the recognition that an edge-wise movement of a rotor blade can cause high loads on the rotor shaft and can also lead to structural damages of the rotor blade. In the case of very large edge-wise movements of the rotor blade, a wind turbine is normally stopped (turbine stop), but this reduces the annular energy production (AEP). In order to reduce the AEP loss, the inventors of the present invention had, inter alia, the idea to change the speed of rotation of the rotor without stopping the rotation of the rotor. In this way the edge-wise vibrations can be reduced and a shutdown of the wind turbine is not necessary.

The method specified herein is, in particular, a computer implemented method, i.e. is performed by a computer or a processor.

Herein, when information is representative for a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively. Furthermore, here and in the following, information is, in particular, electronic information, like electronic data.

The first information is representative for whether an edge-wise movement, for example an edge-wise vibration, of at least one rotor blade exceeds a threshold while the rotor is rotating. The threshold (herein also referred to as the first threshold) may be a predetermined threshold. By way of example, the first information is either 0 or 1, with 0 meaning that the threshold is not exceeded and 1 meaning that the threshold is exceeded.

The first information may be determined repeatedly, e.g. periodically. For example, the first information is determined at least once or at least 5-times or at least 10-times per full rotation of the rotor.

The first information is, in particular, representative for the current situation in the wind turbine. For example, the first information is determined from measurements. The measurements used for determining the first information were taken, for example, at most 5 s or at most 1 s before determining the first information.

The first information may additionally be representative for the number of rotor blades for which the respective edge-wise movement exceeds the threshold. The thresholds for the different rotor blades may be the same. For example, only if the first information is representative for the edge-wise movements of two or more rotor blades to exceed the respective threshold, is the output signal generated. That is, the condition that the first information must be representative for the edge-wise movement of at least one rotor blade to exceed the threshold is a necessary condition for the output signal to be generated. It may or may not be a sufficient condition.

The edge-wise movement of a rotor blade is a movement in a reference frame which rotates together with the rotor blade, herein called "rotating reference frame". Thus, the speed of rotation of the rotating reference frame is the same as the speed of rotation of the rotor blade(s).

The output signal (herein also referred to as first output signal) is generated if the first information is representative for the edge-wise movement of at least one rotor blade to exceed the threshold. The output signal is, in particular, an electric signal which can be transmitted via a wire or wirelessly. The output signal is configured to cause the rotor speed setting system to change the speed of rotation of the rotor without stopping the rotation of the rotor. For example, the speed of rotation is thereby adjusted/controlled according to a speed setpoint. The output signal may be configured to cause the rotor speed setting system to reduce the speed of rotation of the rotor. For example, the output signal is configured to change the speed of rotation by at least 10%.

The speed setpoint may be a fixed value or may be dependent on how much the threshold is exceeded. For example, the greater the excess, the lower the speed setpoint.

The generation of the output signal and, optionally, also the change of the speed of rotation of the rotor may be done in real time. For example, it is done within a time interval of at most one complete rotation or at most two complete rotations of the rotor after the first information has been determined to be representative for the edge-wise movement of at least one rotor blade to exceed the threshold.

According to a further embodiment, the method comprises a further step in which a second information is provided. The second information is representative for a bending moment acting on the at least one rotor blade. The bending moments acting on a rotor blade are quantities in the rotating reference frame.

The second information may be representative for the edge-wise bending moment and/or the flap-wise bending moment acting on each rotor blade. Edge-wise and flap-wise bending moments are bending moments which are measurable with the help of sensors, e.g. strain sensors. The second information may be representative for the bending moment(s) as a function of time. For example, measurements of the bending moment(s) are taken several times per complete rotation of the rotor.

According to a further embodiment, the first information is determined depending on the second information.

According to a further embodiment, determining the first information comprises or consists of determining whether the amplitude of the bending moment, e.g. the maximum value of the bending moment, exceeds a (first) threshold.

According to a further embodiment, the second information is representative for the edge-wise bending moment acting on the at least one rotor blade. Accordingly, determining the first information may comprise or consist of determining whether the amplitude of the edge-wise bending moment exceeds a (first) threshold.

According to a further embodiment, the method comprises a step in which a third information is determined depending on the second information. The third information is representative for an Eigen-mode in the edge-wise bending moment of the at least one rotor blade. The Eigen-mode is a content in the edge-wise bending moment having an edge-wise Eigen-frequency.

For example, the first Eigen-frequency of the at least one rotor blade is between 0.5 Hz and 1 Hz inclusive. In order to extract an Eigen-mode, a band-pass filter may be used. The band-pass filter may extract frequencies which deviate by at most 30% or at most 50% from the Eigen-frequency. Such a width of the band-pass filter is chosen in order to compensate for variations of the Eigen-frequency. Indeed, the Eigen-frequency is slightly dependent on the speed of rotation of the rotor. The extracted Eigen-mode may be the first Eigen-mode with the lowest/first Eigen frequency. Indeed, the first Eigen-mode is particularly easily excitable.

According to a further embodiment, the first information is determined depending on the third information and comprises or consists of determining whether the amplitude of the Eigen-mode exceeds a (first) threshold.

According to a further embodiment, the rotor speed setting system comprises a pitch setting system for setting the pitch angle of the at least one rotor blade.

According to a further embodiment, the (first) output signal is configured to cause the pitch setting system to change the pitch angle of the at least one rotor blade in order to change the speed of rotation of the rotor. Indeed, by changing the pitch angle, the speed of rotation of the rotor can be set.

Additionally or alternatively, the speed setting system may comprise a generator torque setting system which is configured to change the torque of the generator of the wind turbine. The first output signal may then be (additionally or alternatively) configured to cause the generator torque setting system to change the torque of the generator in order to change the speed of rotation of the rotor. Indeed, the speed of rotation of the rotor can be controlled faster by changing the setpoint of the generator torque than by changing the setpoint of the pitch angle, for example.

According to a further embodiment, the rotor comprises at least two rotor blades, e.g. three or more rotor blades. Everything disclosed in connection with at least one rotor blade is also disclosed for all other rotor blades. The second information may be representative for the bending moment(s) of each rotor blade and so on. The output signal may be generated if the first information is representative for the edge-wise movement of at least one rotor blade to exceed the (first) threshold.

According to a further embodiment, the pitch setting system is configured to change the pitch angles of the rotor blades collectively and/or individually in order to reduce the speed of rotation. Likewise, the output (setpoint) signal may be configured to cause the pitch setting system to collectively and/or individually change the pitch angles of the rotor blades.

According to a further embodiment, the rotor speed setting system is additionally configured to control the power output of the wind turbine. The control of the power output may be done by the generator torque setting system specified above.

According to a further embodiment, the output (setpoint) signal is additionally configured to cause the rotor speed setting system to change the power output of the wind turbine. For example, the output signal is configured to reduce the power output of the wind turbine, e.g. by at least 10%.

According to a further embodiment, the method comprises a step in which a new first information is determined after the first output signal has been generated. The new first information is representative for whether an edge-wise movement of at least one rotor blade is below a further threshold after the speed of rotation of the rotor has been changed.

The new first information may be determined in the same way as the first information but represents a later moment in time than the first information. Therefore, all features disclosed in connection with the first information are accordingly disclosed for the new first information. For example, the new first information is determined to be representative for the edge-wise bending moment of a rotor blade to be below the further/second threshold if the amplitude of the edge-wise bending moment assigned to this rotor blade is below a second threshold and/or if the amplitude of the Eigen-mode is below a second threshold.

The further threshold, herein also referred to as second threshold, may be lower or equal or higher than the (first) threshold. For example, a value of the further threshold deviates by at least 10% from the value of the threshold.

According to a further embodiment, the method comprises a step of generating a further output signal after the (first) output signal has been generated. The further output signal, herein also referred to as second output signal, is generated in the case that the new first information is representative for the edge-wise movement of at least one rotor blade to be below the further threshold. The further output signal is configured to cause the rotor speed setting system to change the speed of rotation of the rotor back towards the value before the (first) output signal was generated.

Particularly, the further output signal is generated if the edge-wise movement of the at least one rotor blade is reduced compared to the situation before the first output signal was generated.

In the case of several rotor blades, the further output signal is generated, for example, only if the new first information is representative for the edge-wise movements of two or more, particularly of all, rotor blades to be below the respective second threshold. Thus, the condition that the new first information has to be representative for the edge-wise movement of at least one rotor blade to be below the second/further threshold is a necessary condition. It can or cannot be a sufficient condition.

The further output signal is, for example, configured to cause the rotor speed setting system to change the speed of rotation to a value which deviates at most 10% from the value before the (first) output signal has been generated or to exactly this value.

According to a further embodiment, the method comprises a step of providing a fourth information which is representative for the pitch angle of the at least one rotor blade, particularly for the value of the pitch angle. For example, the fourth information is representative for the pitch angle of the at least one rotor blade at the moment when or shortly before the (first) output signal is generated. That is, the first information resulting in the generation of the output signal and the fourth information may be representative for the same moment in time.

According to a further embodiment, the method comprises a step of determining a fifth information depending on the fourth information. The fifth information is representative for a change rate of the change of the speed of rotation. The change rate is the rate or the speed, respectively, with which the speed of rotation is to be changed. For example, the change rate is determined to be greater for a greater pitch angle.

According to a further embodiment, the output signal comprises the fifth information and is configured to cause the rotor speed setting system to change the speed of rotation of the rotor with the change rate.

According to a further embodiment, the speed setting system is configured to change the speed of rotation of the rotor to 0, i.e. to shut-down the wind turbine. For example, the method comprises a step in which a third output signal is generated if the first information is representative for the edge-wise movement of the at least one rotor blade to exceed the threshold, wherein the third output signal is configured to cause the speed setting system to set the speed of rotation to 0.

According to a further embodiment, the third output signal is configured to change the speed of rotation to 0 after the first output signal has caused the rotor speed setting system to change the speed of rotation, e.g. after a certain time has passed, e.g. the time it takes the rotor to make at least one or at least five complete rotations.

According to a further embodiment, the third output signal is only generated or only transmitted to the rotor speed setting system in the case that every part, or the major part, of the new first information determined in the certain time after the generation of the output signal is not representative for the edge-wise movement of the at least one rotor blade to be below the certain threshold. Particularly, if by changing the speed of rotation of the rotor the edge-wise vibration is not sufficiently damped, the third output signal is generated and the wind turbine is shut down.

According to a further embodiment, the second information is determined depending on measurements taken with the help of a sensor system. The sensor system is, for example, part of the wind turbine. The sensor system may comprise one or more strain sensors, e.g. optical fiber sensors or strain gauge sensors. Moreover, the first sensor system may comprise a position sensor for measuring the position(s) of the at least one rotor blade. Particularly, the sensor system is configured to measure the edge-wise and/or flap-wise bending moment of the at least one rotor blade. The positions of the rotor blades are, e.g., their azimuthal angles in rotor plane. The position sensor may be or may comprise an optical encoder.

Next, the computer program, the computer-readable data carrier and the control device are specified.

According to an embodiment, the computer program comprises instructions which, when the program is executed by a computer, cause the computer to carry out the method for operating a wind turbine according to any one of the embodiments described herein.

According to an embodiment, the computer-readable data carrier has the computer program stored thereon.

According to an embodiment, the control device comprises at least one processor and/or at least one programmable logic controller, plc for short, configured to perform the method for operating a wind turbine according to any one of the embodiments described herein. The control device may be a computer, for example. The control device may be part of the wind turbine or may be an external device which is, for example, several km away from the wind turbine, like a computer in a control station (remote control). For example, the control device is configured to communicate with the wind turbine via a wire or wirelessly.

Next, the control system for operating a wind turbine is specified. The control system is, in particular, configured to perform the method according to any one of the embodiments described herein. Therefore, all features disclosed for the method are also disclosed for the control system and vice versa.

According to an embodiment, the control system is a control system for operating a wind turbine which has a rotor with at least one rotor blade and a rotor speed setting system for setting the speed of rotation of the rotor. The control system comprises a sensor system configured to take measurements with the help of which it is determinable whether an edge-wise movement of at least one rotor blade exceeds a threshold while the rotor is rotating. The control system further comprises the control device as specified herein. The control device is signally connectable or connected to the sensor system in order to provide the control device with the measurements of the sensor system. Furthermore, the control device is signally connectable or connected to the rotor speed setting system in order to provide the rotor speed setting system with the output signal of the control device so that the rotor speed setting system controls the speed of rotation of the rotor depending on the output signal.

For example, the sensor system is signally connectable or is signally connected with the control device via a wire or wirelessly. The sensor system and/or the control device may be part of the wind turbine, i.e. may be integrated into the wind turbine, or may be external. The control device may be signally connected or connectable to the pitch setting system via a wire or wirelessly.

The control device may, accordingly, comprise an interface for receiving data from the sensor system and an interface for sending the output signal to the speed setting system.

The rotor speed setting system may be part of the control system. The rotor speed setting system may comprise a pitch setting system and/or a generator torque setting system. The pitch setting system comprises, for example, at least one actuator for each rotor blade, wherein the actuator is configured to change and/or set the pitch angle of the respective rotor blade. For example, the pitch setting system is configured to change the pitch angles of the rotor blades collectively.

According to a further embodiment, the sensor system comprises at least one strain sensor for each rotor blade. For example, each rotor blade is assigned at least one strain sensor coupled thereto. For example, each rotor blade is assigned at least three or at least four strain sensors. Strain sensors allow the bending moment(s) acting on the rotor blade to be determined. All features disclosed for the at least one strain sensor are herein also disclosed for all other strain sensors.

The strain sensors may be integrated into the respective rotor blade or may be applied to an outer surface of the respective rotor blade. The strain sensors may be temperature compensating strain sensors.

According to a further embodiment, the strain sensors are fiber optic strain sensors.

According to a further embodiment, the strain sensors are strain gauge sensors.

Next, the wind turbine is specified.

According to an embodiment, the wind turbine comprises a rotor with at least one rotor blade and a rotor speed setting system for setting the speed of rotation of the rotor. Furthermore, the wind turbine comprises the control system according to any one of the embodiments described herein.

Hereinafter, the method for operating a wind turbine, the control device, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.
Figure 1 shows an exemplary embodiment of a wind turbine,
Figures 2 and 3 show the behavior of an exemplary embodiment of the wind turbine during operation at different conditions,
Figure 4 shows an example of the time-dependent tilt bending moment acting on the rotor of a wind turbine,
Figure 5 shows a graph illustrating different frequencies being of relevance in a wind turbine,
Figures 6 and 7 show examples of the time-dependent edge-wise bending-moment acting on a rotor blade of a wind turbine,
Figures 8 to 10 show flowcharts of different exemplary embodiments of the method for operating a wind turbine,
Figure 11 shows an exemplary embodiment of the control system and the control device,
Figure 12 shows different information of the wind turbine as a function of time.

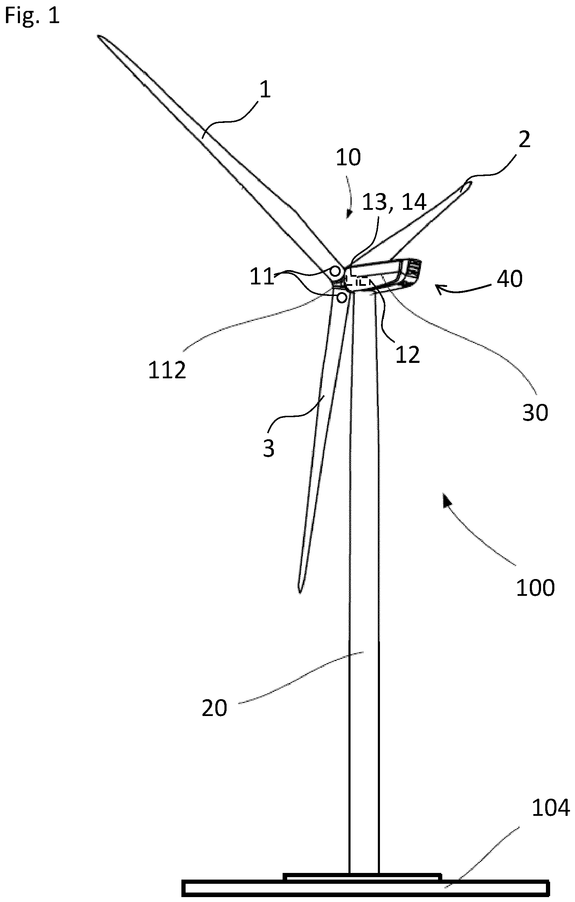

Figure 1 shows a schematic view of an exemplary embodiment of a wind turbine 100 which comprises a tower 20. The tower 20 is fixed to the ground by means of a foundation 104. At one end of the tower 20, opposite to the ground, a nacelle 106 is rotatably mounted. The nacelle 106, for example, comprises a generator which is coupled to a rotor 10 via a gearbox (not shown). The rotor 10 comprises N = 3 (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator via the rotor shaft and the gearbox. The generator converts the mechanical energy of the rotor 10 into electrical energy.

In order to set the rotational speed and the power output, the wind turbine 100 comprises a rotor speed setting system having a pitch setting system 13 which is configured to set the pitch angles of the rotor blades 1, 2, 3. The pitch setting system 13 is configured to collectively set the pitch angles of the rotor blades 1, 2, 3. For example, the pitch setting system 13 comprises at least one actuator for each rotor blade 1, 2, 3 via which an electrical signal is translated into a mechanical movement of the respective rotor blade 1, 2, 3 about its longitudinal axis.

The rotor speed setting system also comprises a generator torque setting system 14 with which the power output of the wind turbine 100 can be set/controlled. The generator torque setting system 14 is configured to set the torque of the generator. At the same time, the speed of rotation of the rotor 10 is changeable by the generator torque setting system 14.

The wind turbine 100 further comprises a control system 40 configured to operate the wind turbine 100. The control system 40 comprises a first sensor system 11, a second sensor system 12 and a control device 30.

The first sensor system 11 comprises, for example, three or four strain sensors for each rotor blade 1, 2, 3, wherein the strain sensors are coupled to the respective rotor blade 1, 2, 3. The strain sensors may be fiber optic strain sensors, for example. The measurement signals from the strain sensors may be used to estimate/determine the bending moment acting on the respective rotor blade 1, 2, 3. Furthermore, the first sensor system 11 may comprise at least one position sensor with the help of which the positions of the rotor blades 1, 2, 3, i.e. their azimuthal angles, can be determined.

The second sensor system 12 comprises, for example, at least one sensor for measuring the pitch angles of the rotor blades 1, 2, 3, at least one sensor for measuring the rotational speed of the rotor 10 and at least one sensor for measuring the power output of the wind turbine. The measurement signals of these sensors can be used to estimate/determine the thrust force acting on the rotor 10 and the wind turbulence intensity at the rotor 10.

The control device 30 comprises, for example, at least one processor. It may be located in the nacelle 106. The control device 30 is signally coupled to the sensor systems 11, 12, the pitch setting system 13 and the generator torque setting system 14 so that it can communicate with the systems 11, 12, 13, 14. The measurements from the sensor systems 11, 12 are processed by the control device 30 and, depending on this, an output signal is possibly transmitted to the systems 13, 14 in order to adjust the pitch angles of the rotor blades 1, 2, 3 and/or the torque of the generator.

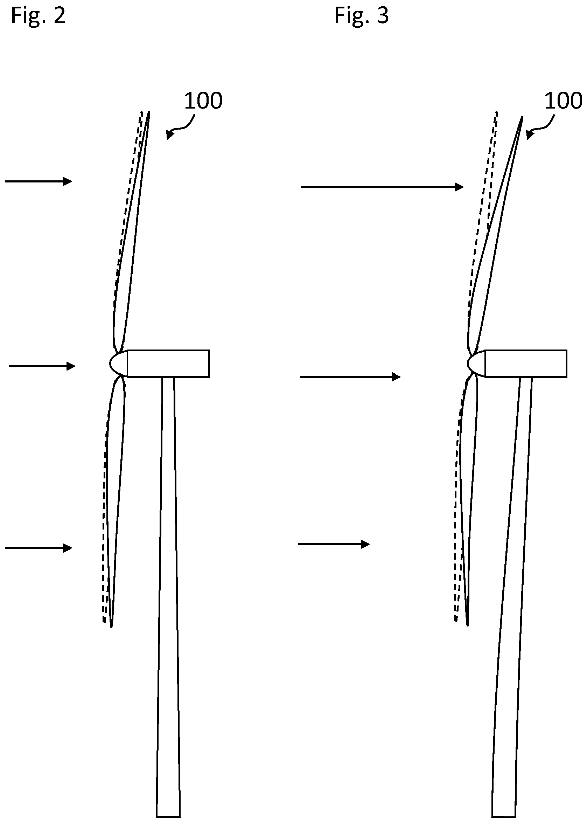

Figure 2 shows the wind turbine 100 from a side view during operation of the wind turbine 100. Wind acting on the rotor 10 of the wind turbine 100 is indicated by the arrows. In figure 2, the wind speed is constant all over the rotor 10. Due to the forces acting on the rotor blades, the rotor blades are deflected with respect to their rest positions (the rest positions are indicated by the dashed lines). As a consequence, tilt bending moments and yaw bending moments act on the rotor in order to deflect or tilt the rotor plane, respectively.

In figure 3, an overall higher wind speed acts on the rotor 10. Furthermore, the wind speed is lower closer to the ground than further away from the ground (so-called wind shear). As can be seen, the deflection of the rotor blades is now larger compared to figure 2. Moreover, due to the greater thrust force acting on the rotor, the tower is bended.

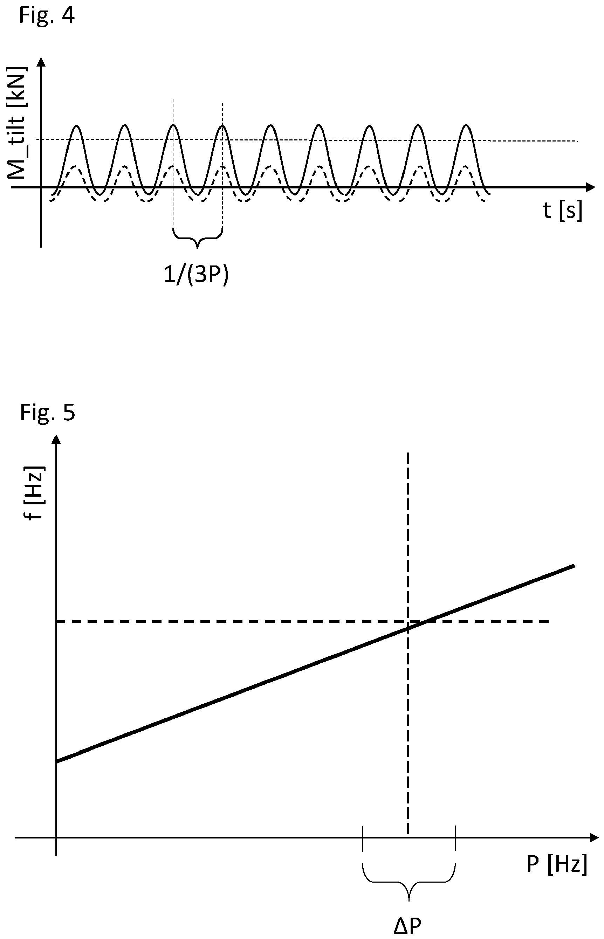

Since, during operation of the wind turbine 100, the rotor 10 is rotating, the tilt bending moments and the yaw bending moments acting on the rotor 10 oscillate. This can be seen in figure 4, showing the tilt bending moment M_tilt acting on the rotor 10 while the rotor is rotating with frequency P as a function of time t. The dashed curve shows the case of the lower overall wind speed and constant wind speed, as illustrated in connection with figure 2, and the solid line shows the case of the higher overall wind speed and wind shear as illustrated in connection with figure 3. As can be seen, the tilt bending moment M_tilt indeed oscillates with frequency 3*P.

The tilt bending moment M_tilt as shown in figure 4 may be determined, for example, from measurements taken with the first sensor system 11 and with the help of a coordinate transformation from the rotating reference frame into a fixed reference frame. The fixed reference frame is assigned to parts of the wind turbine which are not rotating, e.g. the tower 20 or nacelle 106.

Figure 5 shows a graph with the frequency P with which the rotor 10 is rotating (this is equivalent to the speed of rotation) on the x-axis and the frequency of edge-wise vibrations of the rotor blades on the y-axis. The horizontal dashed line indicates the first Eigen-frequency of the edge-wise vibrations of the rotor blades. The first Eigen-frequency changes only very little with increasing frequency P (not visible in figure 5). The solid line in figure 5 is the frequency (M*N+1)*P, with N being the number of rotor blades of the wind turbine and M being an integer greater than zero. For the present case, N = 3 and M = 1, thus the solid line shows the frequency 4*P.

As can be seen, the frequency 4*P intersects with the first Eigen-frequency of the edge-wise vibration of the rotor blades at a certain point. The vertical dashed line indicates the nominal rotational speed of the rotor or the nominal frequency P_n of the rotor, respectively. This nominal frequency is very close to the point where the first Eigen-frequency and the frequency 4*P intersect. Thus, when the rotor is rotating with a frequency P close the nominal frequency P_n, an excitation of the edge-wise vibration with frequency 4*P would be resonant.

On the other hand, the frequency 4*P in the rotating reference frame corresponds to the frequency 3*P in the fixed reference frame. Consequently, a periodic force acting on the rotor 10 with the frequency 3*P can resonantly excite the edge-wise vibrations of the rotor blades 1, 2, 3 at their first Eigen-frequencies when the rotor 10 is rotating with a frequency P close to the nominal frequency P_n. Such a large periodic force acting on the rotor 10 with frequency 3*P appears, however, for example due to a wind shear or a local gust as explained in connection with figures 2 to 4.

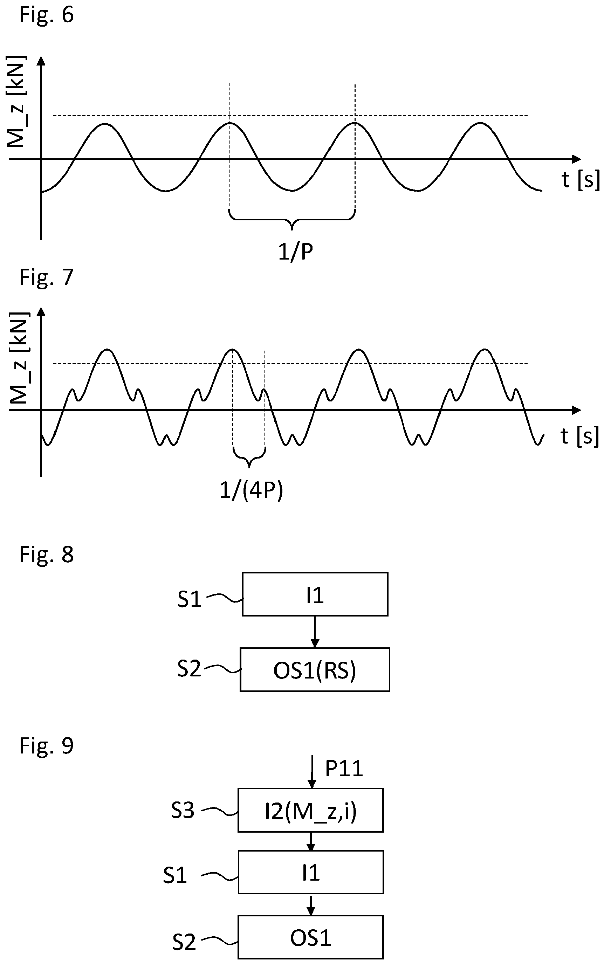

Figures 6 and 7 illustrate measurements of edge-wise bending moments M_z,i of a rotor blade as a function of time t. Figure 6 shows the case without an excitation of the first edge-wise Eigen-frequency and figure 7 shows the case with an excitation of the first edge-wise Eigen-frequency.

In figure 6, a periodic change of the edge-wise bending moment acting on the rotor blade with frequency P is visible. This P-content, i.e. content with frequency P, in the edge-wise bending moment results, for example, from the gravitational force acting on the rotor blade during rotation of the rotor with frequency P.

In figure 7, there is an additional 4*P-content, i.e. a content with frequency 4*P. As explained above, the 4*P-content results from a wind shear or a local gust acting on the rotor. The 4*P content is considerably large since it is resonantly excited (when P is close to the nominal frequency). Thus, the maximum amplitude of the edge-wise vibration is considerably increased in figure 7 compared to figure 6.

Since a wind shear or a local gust appears very often during operation of a wind turbine, large edge-wise vibrations of the rotor blades as indicated in figure 7 appear frequently. However, such edge-wise vibrations induce high load on the rotor shaft and can also damage the rotor blades themselves.

The inventors of the present invention developed a method for operating a wind turbine which allows the edge-wise vibrations of the rotor blades to be reduced without the need for shutting down the wind turbine.

Figure 8 shows a first exemplary embodiment of the method for operating a wind turbine. In a step S1, a first information I1 is provided. The first information I1 is representative for whether an edge-wise movement of at least one rotor blade 1, 2, 3 exceeds a first threshold while the rotor 10 is rotating. If the first information I1 is representative for an edge-wise movement of at least one rotor blade 1, 2, 3 to exceed the first threshold, a step S2 is executed in which a first output signal OS1 is generated. The first output signal OS1 is configured to change the speed of rotation of the rotor 10 without stopping the rotation of the rotor in order to reduce the edge-wise movement of the rotor blades 1, 2, 3. Indeed, if the speed of rotation of the rotor is, for example, moved away from the nominal speed of rotation (nominal frequency), the resonant excitation of edge-wise vibrations can be reduced as explained above.

In the second exemplary embodiment of figure 9, measurements P11 taken with the help of the first sensor system 11 are provided. In a step S3, a second information I2 is determined depending on the measurements P11. The second information I2 is representative for the edge-wise bending moments M_z,i acting on the rotor blades 1, 2, 3 (see also figures 6 and 7). The index "i" herein stands for the different rotor blades and can be 1, 2 or 3 in the present case of three rotor blades.

In step S1, the first information I1 is determined directly depending on the second information I2. For example, determining the first information I1 comprises or consists of determining whether the amplitude of the edge-wise bending moment M_z,i acting on a rotor blade 1, 2, 3 exceeds a threshold (see, for example, horizontal dashed line in figures 6 and 7; in figure 7 the threshold would be exceeded but not in figure 6). If the amplitude exceeds the threshold, the first information I1 is determined to be representative for the edge-wise movement of the corresponding rotor blade 1, 2, 3 to exceed the threshold.

Step S2 is executed in the case that the first information I1 is representative for an edge-wise movement of at least one rotor blade 1, 2, 3 to exceed the threshold. In step S2, the first output signal OS1 is generated. The first output signal OS1 causes the pitch setting system 13 and/or the torque generator system 14 to reduce the speed of rotation of the rotor 10 by changing the pitch angles β_i of the rotor blades 1, 2, 3 and/or the power output PO of the wind turbine 100.

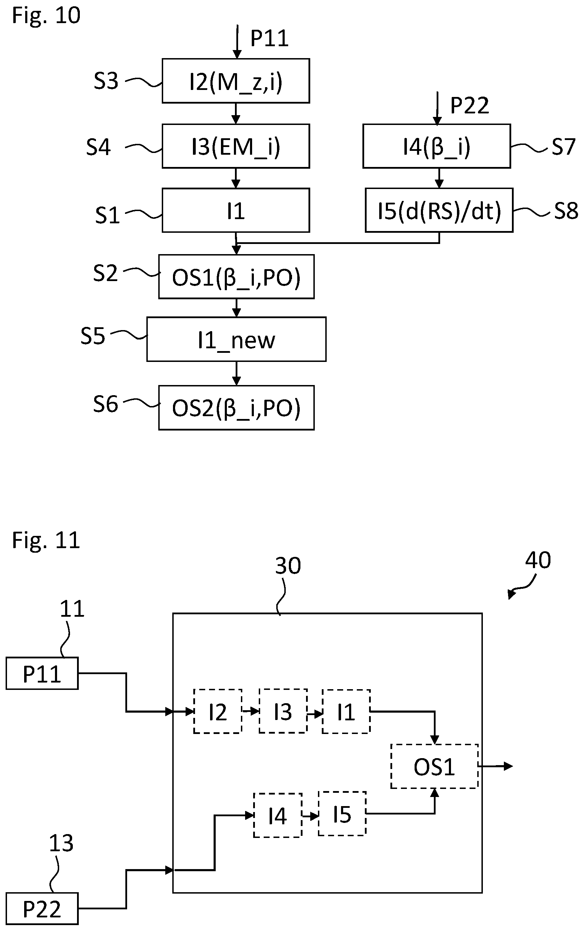

In the exemplary embodiment of figure 10, a step S4 is executed, in which a third information I3 is determined depending on the second information I2. The third information I3 is representative for an Eigen-mode EM_i in the edge-wise bending-moment M_z,i of a rotor blade 1, 2, 3. For example, the third information I3 can be obtained from the second information I2 with the help of a band-pass filter filtering out an edge-wise Eigen-frequency of the Eigen-mode EM_i. The Eigen-mode EM_i is, for example, the first Eigen-mode at the first edge-wise Eigen frequency, i.e. at the lowest edge-wise Eigen-frequency.

Then, in step S2, the first information I1 is determined depending on the third information 13. For example, if an amplitude of the first Eigen-mode EM_i of a rotor blade 1, 2, 3 exceeds a threshold, the first information I1 is determined to be representative for the edge-wise movement of that rotor blade 1, 2, 3 to exceed a threshold.

In the exemplary embodiment of figure 10, the first output signal OS1 is configured to change the speed of rotation of the rotor 10 with a certain change rate d(RS)/dt. That is, the first output signal OS1 is configured to change the pitch angles β_i of the rotor blades collectively with a certain change rate d(RS)/dt. The change rate d(RS)/dt is extractable from a fifth information I5 which is added to the first output signal OS1. That is, the first output signal OS1 comprises the fifth information I5. The fifth information I5 is determined depending on the fourth information I4 which is representative for the pitch angles β_i of the rotor blades 1, 2, 3 before the first output signal OS1 is generated. The pitch angles β_1 of the rotor blades 1, 2, 3 may be the same (collective pitch angle). The fourth information I4 is determined depending on measurements P22 taken with the help of the second sensor system 12. For example, the change rate d(RS)/dt is determined to be higher for a larger collective pitch angle. The first output signal OS1 then causes the pitch setting system 13 to collectively change the pitch angles β_i of the rotor blades 1, 2, 3 with the determined change rate d(RS)/dt.

After step S2, a step S5 is executed in which new first information I1_new is determined. The new first information I1_new is representative for whether an edge-wise movement of at least one rotor blade 1, 2, 3 is below a second threshold after the speed of rotation of the rotor 10 has been changed. For example, similar steps as executed for determining the first information I1 are executed. Thus, depending on new second and/or third information, it may be determined whether the amplitude of the edge-wise bending moment M_z,i or of the first Eigen-mode EM_i of the edge-wise bending moment M_z,i is below a second threshold. The second threshold is, for example, lower than the first threshold.

For example, if the new first information I1_new is representative for the edge-wise movements of all rotor blades 1, 2, 3 to each be below the second threshold after the speed of the rotation of the rotor 10 has been changed, a step S6 is executed in which a second output signal OS2 is generated which is configured to cause the rotor speed setting system 13, 14 to change the speed of rotation RS of the rotor 10 back towards the value before the first output signal OS1 was generated. For example, the second output signal OS2 is configured to again increase the speed of rotation of the rotor 10 towards the nominal value of the speed of rotation.

Figure 11 shows an exemplary embodiment of the control system 40. The control system 40 comprises the sensor systems 11, 12, with which the measurements P11, P12 can be taken. These measurements P11, P12 are provided to the control device 30 which performs the method steps as described in connection with figures 8 to 10 and delivers an output signal OS1 which the control system 40 then transmits to the speed setting system 13, 14 of the wind turbine 100 in order to set the speed of rotation and/or the power output.

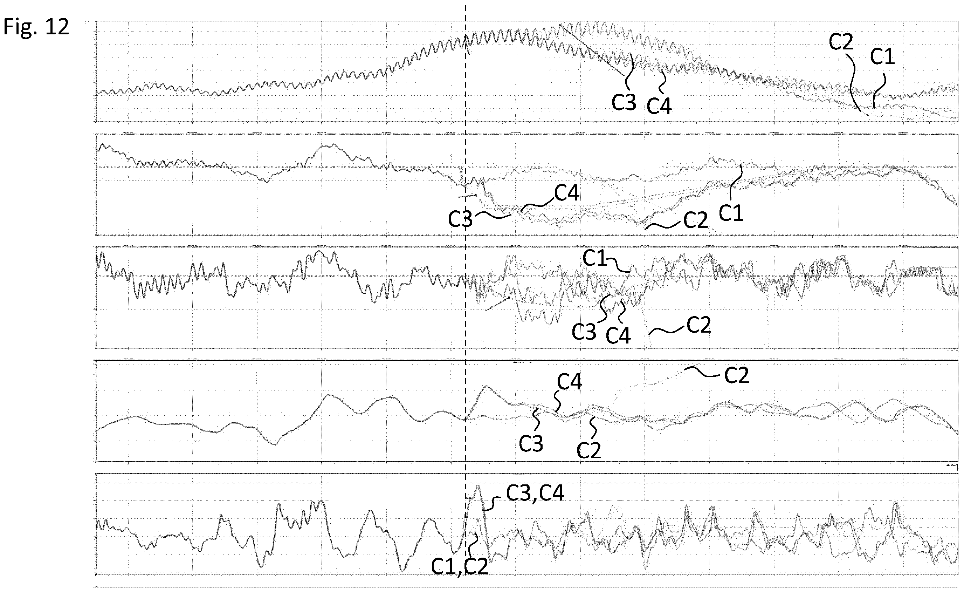

Figure 12 shows different information for a wind turbine. The different curves C1, C2, C3, C4 stand for different means for reacting on excessive edge-wise movements. The curve C1 represents the case that nothing is done in reaction on the edge-wise movement to exceed the threshold. Curve C2 represents the case that the wind turbine is shut down in reaction on the edge-wise movement to exceed the threshold. Curve C3 represents the case that the speed of rotation is solely changed by operating the pitch setting system in reaction on the edge-wise movement to exceed the threshold. Curve C4 represents the case that the speed of rotation is changed by operating the pitch setting system and the generator torque setting system in reaction on the edge-wise movement to exceed the threshold.

The upper diagram shows the edge-wise bending moment M_z,i of a rotor blade as a function of time. At the time indicated by the dashed line, the amplitude of the edge-wise bending moment M_z,i exceeds a first threshold. At this moment or shortly after that, the first output signal OS1 is generated in the case of the curves C3 and C4 and, accordingly, the speed of rotation of the rotor is reduced. As a consequence, the edge-wise bending moment M_z,i reduces.

The second upper diagram of figure 12 shows the speed of rotation of the rotor as a function of time. Indeed, at the above identified moment (indicted by the dashed line), the speed of rotation of the rotor goes down in the case of curves C3 and C4. In the case of curve C2, the speed of rotation is at some time reduced to zero.

In the middle diagram of figure 12, the power output PO of the wind turbine is shown as a function of time. With the reduction of the speed of rotation at the time indicated by the dashed line, also the power output is reduced in the case of curves C3 and C4. In the case of curve C2, the power output is at some time reduced to zero.

The second lower diagram of figure 12 shows the pitch angle β_i of the rotor blade(s) as a function of time. The reduction of the speed of rotation is achieved, inter alia, by increasing the pitch angle (see curves C3 and C4).

The lower diagram of figure 12 shows the change rate d(RS)/dt with which the pitch angle is changed. At the time the speed of rotation is reduced, the pitch angle increases very rapidly in order to react fast on the large edge-wise vibrations (see curves C3 and C4).

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference signs:

- 1: first rotor blade
- 2: second rotor blade
- 3: third rotor blade
- 10: rotor
- 11: first sensor system
- 12: second sensor system
- 13: speed setting system / pitch control system
- 14: speed setting system / generator torque setting system
- 20: tower
- 30: control device
- 40: control system
- 100: wind turbine
- 104: foundation
- 106: nacelle
- 112: rotor hub

- I1: first information
- I1_new: new first information
- I2: second information
- I3: third information
- I4: fourth information
- I5: fifth information
- OS1: (first) output signal
- OS2: (second) output signal

- M_z,i: edge-wise bending moment
- M_tilt: tilt bending moment
- β_i: pitch angle
- P11: measurements
- P12: measurements
- P: frequency
- P_n: nominal frequency
- PO: power output
- d(RS)/dt: change rate
- EM_i: Eigen-mode

- S1 to S8: method steps
- C1 to C4: curves

## Claims

1. Method for operating a wind turbine (100) having a rotor (10) with at least one rotor blade (1, 2, 3) and a rotor speed setting system (13, 14) for setting the speed of rotation (RS) of the rotor (10), the method comprising
- (S1) determining first information (I1) which is representative for whether an edge-wise movement of at least one rotor blade (1, 2, 3) exceeds a threshold while the rotor (10) is rotating, and, if this is the case,
- (S2) generating an output signal (OS1) which is configured to cause the rotor speed setting system (13) to change the speed of rotation (RS) of the rotor (10) without stopping the rotation of the rotor (10) in order to reduce the edge-wise movement of the at least one rotor blade (1, 2, 3).

2. Method according to claim 1, further comprising
- (S3) providing second information (12) which is representative for a bending moment (M_z,i) acting on the at least one rotor blade (1, 2, 3), wherein
- the first information (I1) is determined depending on the second information (12).

3. Method according to claim 2, wherein
- determining the first information (I1) comprises determining whether the amplitude of the bending moment (M_z,i) exceeds a threshold.

4. Method according to claim 2 or 3, wherein
- the second information (I2) is representative for the edge-wise bending moment (M_z,i) acting on the at least one rotor blade (1, 2, 3),
- the method further comprises (S4) providing third information (I3) depending on the second information (I2), wherein the third information (I3) is representative for an Eigen-mode (EM_i) in the edge-wise bending moment (M_z,i) of the at least one rotor blade (1, 2, 3), the Eigen-mode (EM_i) being a content in the edge-wise bending-moment (M_z,i) having an edge-wise Eigen-frequency, wherein
- the first information (I1) is determined depending on the third information (I3) and comprises determining whether the amplitude of the Eigen-mode (EM_i) exceeds a threshold.

5. Method according to any one of the preceding claims, wherein
- the rotor speed setting system (13, 14) comprises a pitch setting system (13) for setting the pitch angle (β_i) of the at least one rotor blade (1, 2, 3),
- the output signal (OS1) is configured to cause the pitch setting system (13) to change the pitch angle (β_i) of the at least one rotor blade (1, 2, 3) in order to change the speed of the rotation of the rotor (10).

6. Method according to claim 5, wherein
- the rotor (10) comprises at least two rotor blades (1, 2, 3),
- the output signal (OS1) is configured to cause the pitch setting system (13) to collectively change the pitch angles (β_i) of the rotor blades (1, 2, 3).

7. Method according to any one of the preceding claims, wherein
- the rotor speed setting system (13, 14) is additionally configured to set the power output (PO) of the wind turbine,
- the first output signal (OS1) is additionally configured to cause the rotor speed setting system (13, 14) to change the power output (PO) of the wind turbine (100).

8. Method according to any one of the preceding claims, wherein, after generating the output signal (OS1), the following steps are executed
- (S5) determining new first information (I1_new) which is representative for whether an edge-wise movement of at least one rotor blade (1, 2, 3) is below a further threshold after the speed of the rotation of the rotor (10) has been changed, and, if this is the case,
- (S6) generating a further output signal (OS2) which is configured to cause the rotor speed setting system (13) to change the speed of the rotation (RS) of the rotor (10) back towards the value before the output signal (OS1) was generated.

9. Method according to any one of the preceding claims, further comprising
- (S7) providing a fourth information (I4) which is representative for the pitch angle (β_i) of the at least one rotor blade (1, 2, 3),
- (S8) determining a fifth information (I5) depending on the fourth information (I4), wherein the fifth information (I5) is representative for a change rate (d(RS)/dt) of the change of the speed of rotation (RS),
- the output signal (OS1) comprises the fifth information (I5) and is configured to cause the rotor speed setting system (13, 14) to change the speed of rotation (RS) of the rotor (10) with the change rate (d(RS)/dt).

10. Method according to claim 2 or any one of claims 3 to 9 in its dependency on claim 2, wherein
- the second information (I2) is determined depending on measurements (P11) taken with the help of a sensor system (11) .

11. Computer program comprising instructions which, when the program is executed by a computer, cause the computer to carry out the method of any one of claims 1 to 10.

12. Computer-readable data carrier having the computer program of claim 11 stored thereon.

13. Control device (30) comprising at least one processor configured to perform the method of any one of claims 1 to 10.

14. Control system (40) for operating a wind turbine (100) having a rotor (10) with at least one rotor blade (1, 2, 3) and a rotor speed setting system (13, 14) for setting the speed of rotation (RS) of the rotor (10), the control system (40) comprising
- a sensor system (11) configured to take measurements (P11) with the help of which it is determinable whether an edge-wise movement of at least one rotor blade (1, 2, 3) exceeds a threshold while the rotor (10) is rotating,
- the control device (30) according to claim 13, wherein
- the control device (30) is signally connectable to the sensor systems (11) in order to provide the control device (30) with the measurements (P11) of the sensor system (11),
- the control device (30) is signally connectable to the rotor speed setting system (13) in order to provide the rotor speed setting system (13, 14) with the output signal (OS1) of the control device (30) so that the rotor speed setting system (13, 14) controls the speed of rotation (RS) of the rotor (10) depending on the output signal (OS1).

15. Wind turbine (100) comprising
- a rotor (10) with at least one rotor blade (1, 2, 3),
- a rotor speed setting system (13, 14) for setting the speed of rotation (RS) of the rotor (10),
- the control system (40) according to claim 14.
